# EUROPÄISCHE PATENTSCHRIFT

(11) **EP 2 035 725 B1**
(45) Veröffentlichungstag und Bekanntmachung des Hinweises auf die Patenterteilung: **17.11.2010**
(21) Anmeldenummer: 07729952.7
(22) Anmeldetag: 06.06.2007
(51) Int. Cl.: F16H 57/04

(54) **WÄRMETAUSCHER MIT INTEGRIERTEM BYPASS-VENTIL**
HEAT EXCHANGER WITH INTEGRATED BYPASS VALVE
ÉCHANGEUR DE CHALEUR MUNI D'UNE SOUPAPE DE DÉRIVATION INTÉGRÉE

(30) Priorität: 30.06.2006 DE 102006030790
(43) Veröffentlichungstag der Anmeldung: 18.03.2009
(73) Patentinhaber: ZF Friedrichshafen AG, 88038 Friedrichshafen (DE)
(72) Erfinder: FÜHRER, Gerhard, 88048 Friedrichshafen (DE); HÖRING, Gerhard, 88709 Hagnau (DE)
(86) Internationale Anmeldenummer: PCT/EP2007/055577
(87) Internationale Veröffentlichungsnummer: WO 2008/000605

(56) Entgegenhaltungen:
- DE-A1- 3 923 936
- DE-A1- 4 232 366
- DE-A1- 10 315 684

## Beschreibung

Die Erfindung betrifft ein Getriebe mit einem Wärmetauscher nach dem Oberbegriff des Anspruchs 1 und einen Wärmetauscher nach dem oberbegriff des Anspruchs 13.

Ein solches Getriebe und ein solcher Wärmetauscher sind jeweils aus der DE 3923936 A1 und der DE 4232366 A1 bekannt.

Bei modernen, hoch belasteten Fahrzeuggetrieben muss das Getriebeöl auf für das System unkritische Temperaturen gekühlt werden. Insbesondere in Gebieten mit einer hohen Umgebungstemperatur und bei Fahrzeugen, bei denen aus Gründen der Geräuschreduzierung eine Kapselung des Getriebes vorgesehen ist, sind entsprechende Kühleinrichtungen in Form eines Wärmetauschers vorgesehen. Wärmetauscher werden in der Regel zur zusätzlichen Kühlung des Getriebeöls eingesetzt, können aber während der Warmlaufphase des Getriebes auch zur Erwärmung des Getriebeöls Verwendung finden.

Die heute bekannten Wärmetauscher sind entweder Öl/Luft- oder Öl/Wasser-Wärmetauscher und werden als zusätzliche Komponenten an geeigneter Stelle im Fahrzeug montiert. Öl/Wasser-Wärmetauscher können auch in den Motorkühlkreislauf des Fahrzeugs integriert sein.

In der DE 103 15 684 A1 ist ein Getriebe offenbart, das ein Getriebegehäuse aufweist, welches einen Bereich umfasst, in dem Zahnräder rotieren. Das Getriebe weist auch einen Wärmetauscher auf, der in dem Getriebe erzeugte und an ein Getriebeschmiermittel übergebene Wärme aufnimmt und an ein Kühlmittel zum Abtransport der Wärme vom Getriebe weg abgibt. In dem Getriebegehäuse außerhalb des Bereichs, in dem die Zahnräder rotieren, ist eine Vertiefung vorgesehen, die vom Getriebeschmiermittel durchströmt wird und in der der Wärmetauscher angeordnet ist. Eine Ausbildungsform zeigt, dass auf der Saugseite einer das Getriebeschmiermittel fördernden Pumpe ein Bypass-Ventil vorgesehen ist, das eine Umgehung des Wärmetauschers bei Temperaturen des Getriebeschmiermittels unterhalb eines vorgegebenen Grenzwertes ermöglicht.

Nachteile des Stands der Technik sind unter anderem, dass für das baulich getrennte Bypass-Ventil zusätzliche Schnittstellen benötigt werden, welche gegen Leckage abgedichtet werden müssen. Zudem erfordert ein vom Wärmetauscher und zu kühlendem oder erwärmendem Aggregat baulich getrennter Bypass einen entsprechenden baulichen Aufwand und somit zusätzliche Herstellungskosten.

Der vorliegenden Erfindung liegt die Aufgabe zugrunde, ein Kühlsystem effizienter zu gestalten und die Nachteile des Standes der Technik zu beseitigen.

Die der Erfindung zugrunde liegende Aufgabe wird durch ein Getriebe nach Anspruch 1 und einen wärmetauscher nach Anspruch 13 gelöst.

Ein Getriebe weist ein Getriebegehäuse auf, welches einen Bereich umfasst, in dem Zahnräder rotieren. Das Getriebe weist auch einen Wärmetauscher auf, der in dem Getriebe erzeugte und an ein Getriebeschmiermittel übergebene Wärme aufnimmt und an ein Kühlmittel zum Abtransport der Wärme vom Getriebe weg abgibt. Im Getriebegehäuse außerhalb des Bereichs, in dem die Zahnräder rotieren, ist eine Vertiefung vorgesehen, die vom Getriebeschmiermittel durchströmt wird und in der der Wärmetauscher angeordnet ist.

Vorteilhafterweise stellt der Wärmetauscher ein separates Bauteil dar, das in die Vertiefung im Getriebegehäuse einsetzbar ist. Der Wärmetauscher kann mit lediglich einem durch ein Dichtmittel abgedichteten Flansch gehalten werden, der beispielsweise von einem Sicherungsring gestützt wird. Das Dichtmittel und der Flansch können mit dem Wärmetauscher auch einteilig ausgebildet sein.

Zu Wartungs- und Montagezwecken ist der Wärmetauscher in der Vertiefung vorteilhafterweise von außerhalb des Gehäuses zugängig. Der Wärmetauscher kann beispielsweise als Rohrbündel-Wärmetauscher oder als Platten-Wärmetauscher ausgebildet sein.

In einer Ausgestaltungsvariante ist das Kühlmittel zum Abtransport der Wärme vom Getriebe mit einem Kühler außerhalb des Getriebes verbunden. Besonders vorteilhaft ist die Ausgestaltung dann, wenn das Kühlmittel zum Abtransport der Wärme vom Getriebe ein Kühlmittel im Kühlkreislauf eines Verbrennungsmotors ist, der das Getriebe antreibt.

Das Kühlmittel ist vorzugsweise eine auf Wasser basierende Flüssigkeit und das Getriebeschmiermittel eine auf Öl basierende Flüssigkeit.

Durch eine vorteilhafte Ausführung und Anordnung der Kanäle für das Getriebeschmiermittel bildet das Getriebegehäuse direkt das Gehäuse für den Wärmetauscher. Dadurch erfolgt eine Zwangsführung des gesamten geförderten Getriebeschmiermittels über den Wärmetauscher. Hierdurch wird der Wirkungsgrad des Wärmetauschers verbessert und eine kleine und kompakte Bauweise erreicht. Durch kurze Kanäle und einen großen Strömungsquerschnitt, die durch die konsequente Integration in das Getriebegehäuse dargestellt werden können, ergibt sich ein sehr niedriger Druckabfall. Zur Ölführung, Abdichtung und Befestigung sind nur einfache und kostengünstige Adaptionsteile notwendig. Einfache und bewährte Technik auch bezüglich des Anschlusses des Kühlmittels ohne zusätzliche Abdichtungselemente ist gewährleistet.

Trotz des hohen Integrationsgrades ist eine einfache Nachrüstmöglichkeit und Demontierbarkeit ohne Demontage des gesamten Getriebes möglich, Die einfache Bauweise und die wenigen Schnittstellen erzeugen niedrige Hierstellungskosten. Gleichzeitig wird ein sehr guter Schutz des Wärmetauschers vor Beschädigungen oder sonstigen mechanischen Einflüssen erreicht.

Erfindungsgemäß weist der Wärmetauscher ein am Wärmetauscher angeordnetes Bypass-Ventil auf, das eine Umgehung des Wärmetauschers ab einem vorgegebenen Unter- bzw. Überdruck ermöglicht.
Ein Unterdruck entsteht, wenn sich der Durchflusswiderstand in der Vertiefung, welche vom Getriebeschmiermittel durchströmt wird und in der der Wärmetauscher angeordnet ist, vergrößert und die Saugseite einer das Getriebeschmiermittel fördernden Pumpe mit einer Auslassöffnung der Vertiefung verbunden ist.

Ein Überdruck entsteht, wenn sich der Durchflusswiderstand in der Vertiefung vergrößert und die das Getriebeschmiermittel fördernde Pumpe zwischen einem Ölsumpf des Getriebes und einer Einlassöffnung der Vertiefung angeordnet ist. Ein größerer Durchflusswiderstand kann beispielsweise entstehen, wenn die Temperatur des Getriebeschmiermittels unterhalb eines vorgegebenen Grenzwertes liegt und/oder im Getriebeschmiermittel Verschmutzungen enthalten sind. Herrscht ein solcher Unter- bzw. Überdruck vor, so wird über das am Wärmetauscher angeordnete Bypass-Ventil eine Verbindung zu entsprechenden Bypass-Kanälen hergestellt. Diese Bypass-Kanäle sind vorteilhafterweise direkt in das Getriebegehäuse integriert. Die Funktion des Wärmetauschers und die Bypass-Funktion werden durch ein Dichtelement voneinander getrennt. Das Dichtelement kann beispielsweise als Kunststoff- oder Metallrohr ausgebildet sein.

Das am Wärmetauscher angeordnete Bypass-Ventil wird automatisch mit dem Einbau des Wärmetauschers in das Getriebegehäuse montiert, wodurch eine hohe Systemsicherheit gewährleistet ist. Durch das am Wärmetauscher angeordnete Bypass-Ventil und die im Getriebegehäuse integrieren Bypass-Kanäle kann die Bypass-Funktion durch eine sehr kompakte Bauweise realisiert werden. Durch die integrierte Bypass-Funktion können im Vergleich mit einer baulich getrennten Bypass-Funktion entsprechende Schnittstellen reduziert werden und somit das Problem von Leckagen vermieden werden. Durch eine geschickte Anordnung der Bypass-Kanäle im Getriebegehäuse ist der bauliche Aufwand für die Bypass-Funktion minimal und somit kostengünstig.

Das am Wärmetauscher angeordnete Bypass-Ventil ist als Sitzventil ausgebildet sein, welches einen Ventildeckel und eine Ventildeckelfeder umfasst.

Im Folgenden wird das Grundprinzip der Erfindung, welche mehrere Ausführungsformen zulässt, an Hand einer Zeichnung beispielhaft näher erläutert.

Es zeigen:
- Fig. 1: eine schematische Darstellung eines Fahrzeugs mit Wär- metauscher und Bypass-Ventil nach dem Stand der Tech- nik,
- Fig. 2: eine Ausführungsform eines Wärmetauschers mit integrier- tem Bypass-Ventil, während einer Getriebeölkühlung und
- Fig. 3: den Wärmetauscher nach Fig. 2 während einer Bypass- Funktion.

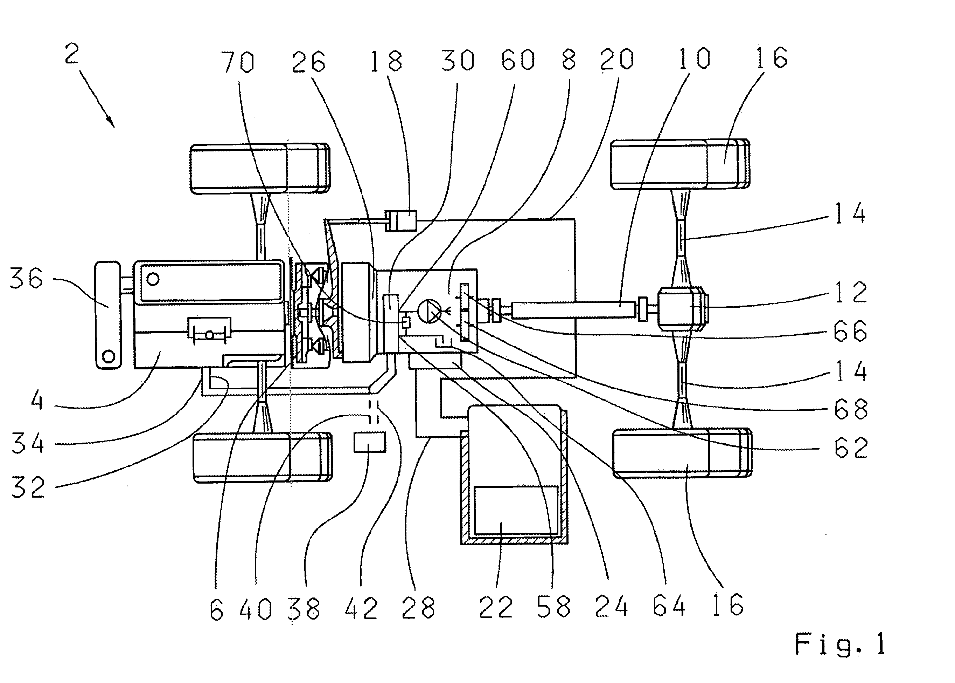

Die Fig. 1 zeigt eine schematische Darstellung eines Fahrzeuges 2 mit einem Antriebsmotor 4, der über eine Reibungskupplung 6 auf ein Getriebe 8 einwirkt. Das Getriebe 8 ist über eine Abtriebswelle 10 mit einem Differenzial 12 verbunden, das über je eine Halbachse 14 ein Fahrzeugrad 16 antreibt. Die Reibungskupplung 6 wird von einem Aktuator 18 betätigt, der über eine Signalleitung 20 mit einer Steuerung 22 verbunden ist, Das Getriebe 8 wird von einem Getriebesteller 24 betätigt, der auf dem Gehäuse 26 des Getriebes 8 angeordnet ist und der über eine Leitung 28 mit der Steuerung 22 verbunden ist. Im Gehäuse 26 ist ein Wärmetauscher 30 eingesetzt, der über zwei Kühlmittelleitungen 32 und 34 mit dem Motor 4 und dessen Kühlmittel verbunden ist. Das aufgewärmte Kühlmittel wird in einem Fahrzeugkühler 36 heruntergekühlt Alternativ kann ein am Fahrzeug 2 montierter Kühler 38 mit dem Wärmetauscher 30 über die Kühlmittelleitungen 40, 42 verbunden sein, in dem dann das Kühlmittel des Wärmetauschers 30 heruntergekühlt wird. Der Wärmetauscher 30 ist über eine Öleinlassöffnung 58 mit einem Ölsumpf 64 und über eine Ölauslassöffnung 60 mit einer Ölpumpe 62 verbunden, die Öl zu Zahnrädern 66, 68 in einem Bereich des Getriebegehäuses 26 führt. Bei Öltemperaturen unterhalb eines vorgegebenen Grenzwertes durchströmt das Getriebeöl nicht den Wärmetauscher 30, sondern wird durch ein baulich getrenntes Bypass-Ventil 70 gepumpt, wodurch der Wärmetauscher 30 umgangen wird.

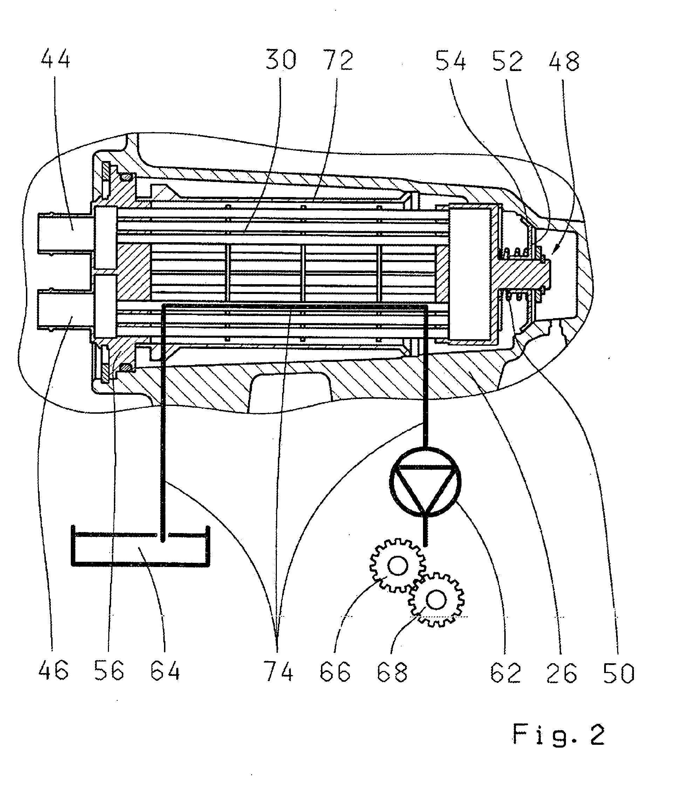

Die Fig. 2 zeigt den erfindungsgemäßen Wärmetauscher 30 mit integriertem Bypass-Ventil 48, welcher im Getriebegehäuse 26 angeordnet ist, Über eine Einlassöffnung 44 gelangt Kühlmittel in das Innere des Wärmetauschers 30, welches den Wärmetauscher 30 über eine Auslassöffnung 46 wieder verlässt. In dem Getriebegehäuse 26 ist der Wärmetauscher 30 in einer Vertiefung 56 so angeordnet, dass das von der Ölpumpe 62 aus dem Ölsumpf 64 angesaugte Getriebeöl durch eine Öleinlassöffnung in die Vertiefung 56 eintritt und dort den Wärmetauscher 30 umströmen kann. Zwangsgeführt verlässt das Getriebeöl die Vertiefung 56 an einer Ölauslassöffnung wieder und wird in Richtung auf die ölpumpe 62 abgesaugt, die das Öl zu Zahnrädern 66, 68 in einem Bereich des Getriebegehäuses 26 führt.

Durch die Anordnung des Wärmetauschers 30 in der Vertiefung 56 des Getriebegehäuses 26, durch die durch die Ölpumpe 62 das Getriebeöl zwangsweise geführt wird, wird eine optimale Kühlung des gesamten Getriebeöls erreicht.

Der Wärmetauscher 30 weist ein am Wärmetauscher 30 angeordnetes Bypass-Ventil 48 auf, das eine Umgehung des Wärmetauschers 30 ab einem vorgegebenen Unterdruck ermöglicht. Das Bypass-Ventil 48 ist als Sitzventil ausgebildet und umfasst einen Ventildeckel 52 und eine Ventildeckelfeder 50. Das Getriebegehäuse 26 weist einen Ventilsitz 54 auf, an welchem der Ventildeckel 52 des Bypass-Ventils 48 im nichtbetätigten Zustand anliegt, ist das Bypass-Ventil 48 nicht betätigt, so wird der Wärmetauscher 30 von dem über die Ölpumpe 62 aus dem Getriebesumpf 64 angesaugten Getriebeöl umströmt. Über Hydraulikleitungen 74 wird das Getriebeöl vom Ölsumpf 64 in die Vertiefung 56, in der der Wärmetauscher 30 angeordnet ist, und von dort zur Ölpumpe 62 bzw. zu den Zahnrädern 66, 68 geführt. Die Funktion des Wärmetauschers 30 und die Bypass-Funktion werden durch ein Dichtelement 72 voneinander getrennt.

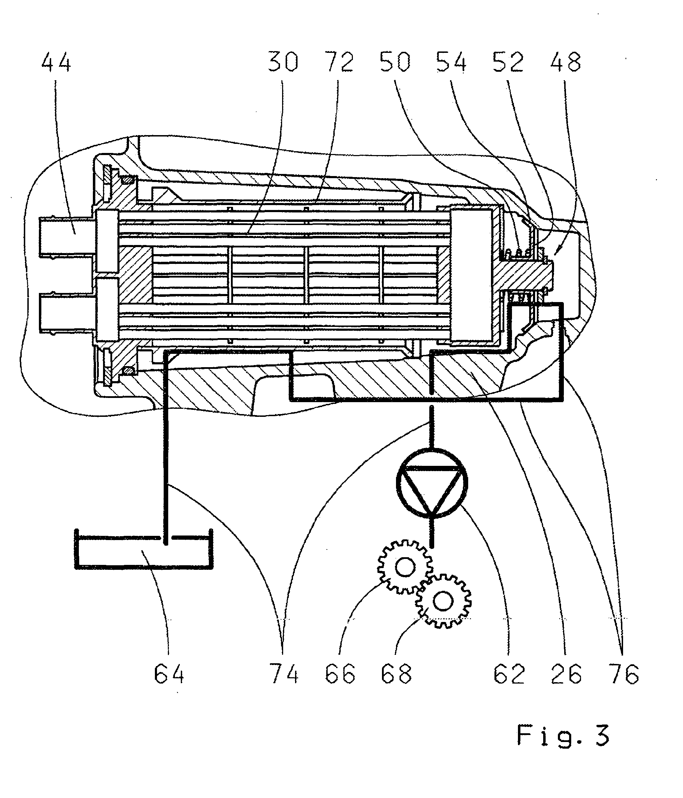

Die Fig. 3 zeigt den Wärmetauscher 30 nach Fig. 2 während der Bypass-Funktion. Das Bypass-Ventil 48 ist noch im nichtbetätigten Zustand dargestellt. Die Ventildeckelfeder 50 ist derart ausgebildet, dass ab einem bestimmten Unterdruck in der Vertiefung 56, in der der Wärmetauscher 30 angeordnet ist, über den Ventildeckel 52 des Bypass-Ventils 48 eine Verbindung zu entsprechenden Bypass-Kanälen 76 hergestellt wird. Diese Bypass-Kanäle 76 sind vorteilhafterweise direkt in das Getriebegehäuse 26 integriert. Die Funktion des Wärmetauschers 30 und die Bypass-Funktion werden durch das Dichtelement 72 voneinander getrennt. Im betätigten Zustand des Bypass-Ventils 48, also wenn in der Vertiefung 56 ein bestimmter Unterdruck vorherrscht, liegt der Ventildeckel 52 nicht mehr am Ventilsitz 54 an. Somit wird der Wärmetauscher 30, der in der Vertiefung 56 angeordnet ist, nicht mehr von dem von der Ölpumpe 62 aus dem Getriebesumpf 64 angesaugten Getriebeöl umströmt. Über Hydraulikleitungen 74 wird das Getriebeöl vom Ölsumpf 4 über dar Bypass-Ventil 48, durch den vom Dichtelement 72 begrenzten Bereich und die Bypass-Kanäle 76 zur Ölpumpe 62 bzw. zu den Zahnrädern 66, 68 geführt.

Bezugszeichen
- 2: Fahrzeug
- 4: Antriebsmotor
- 6: Reibungskupplung
- 8: Getriebe
- 10: Abtriebswelle
- 12: Differenzial
- 14: Halbachse
- 16: Fahrzeugrad
- 18: Aktuator
- 20: Signalleitung
- 22: Steuerung
- 24: Getriebesteller
- 26: Gehäuse
- 28: Leitung
- 30: Wärmetauscher
- 32: Kühlmittelleitung
- 34: Kühlmittelleitung
- 36: Fahrzeugkühler
- 38: Kühler
- 40: Kühlmittelleitung
- 42: Kühlmittelleitung
- 44: Einlassöffnung
- 46: Auslassöffnung
- 48: integriertes Bypass-Ventil
- 50: Ventildeckelfeder
- 52: Ventildeckel
- 54: Ventilsitz
- 56: Vertiefung
- 58: Öleinlassöffinung
- 60: Ölauslassöffnung
- 62: Ölpumpe
- 64: Ölsumpf
- 66: Zahnrad
- 68: Zahnrad
- 70: Bypass-Ventil
- 72: Dichtelement
- 74: Hydraulikleitungen
- 76: Bypass-Kanäle

## Patentansprüche

1. Getriebe (8) mit einem Getriebegehäuse (26), das einen Bereich umfasst, in dem Zahnräder (66, 68) rotieren, mit einem Wärmetauscher (30), der in dem Getriebe (8) erzeugte und an ein Getriebeschmiermittel übergebene Wärme aufnimmt und an ein Kühlmittel zum Abtransport der Wärme vom Getriebe (8) weg abgibt, **dadurch gekennzeichnet, dass** ein Bypass-Ventil (48) vorgesehen ist, das eine Umgehung des Wärmetauschers (30) ab einem vorgegebenen Unter- bzw. Überdruck ermöglicht, wobei das Bypass-Ventil (48) als Sitzventil ausgebildet ist und einen Ventildeckel (52), eine Ventildeckelfeder (50) und einen Ventilsitz (54) aufweist, und wobei der Ventildeckel (52) und die Ventildeckelfeder (50) am Wärmetauscher angeordnet sind und das Getriebegehäuse (26) den Ventilsitz (54) aufweist.

2. Getriebe (8) nach Anspruch 1, **dadurch gekennzeichnet, dass** in dem Getriebegehäuse (26) außerhalb des Bereichs, in dem die Zahnräder (66, 68) rotieren, eine Vertiefung (56) vorgesehen ist, die vom Getriebeschmiermittel durchströmt wird und in der der Wärmetauscher (30) angeordnet ist.

3. Getriebe (8) nach Anspruch 1 oder 2, **dadurch gekennzeichnet, dass** der Ventildeckel (52) des Bypass-Ventils (48) in nichtbetätigtem Zustand an dem Ventilsitz (54) anliegt.

4. Getriebe (8) nach Anspruch 3 **dadurch gekennzeichnet, dass** im betätigten Zustand des Bypass-Ventils (48) das Getriebeschmiermittel durch einen von einem Dichtelement (72) begrenzten Bereich und durch Bypass-Kanäle (76) geführt ist.

5. Getriebe (8) nach Anspruch 4, **dadurch gekennzeichnet, dass** das Dichtelement (72) in Form eines Rohres aus Kunststoff oder Metall ausgebildet ist.

6. Getriebe (8) nach einem der Ansprüche 1 bis 5, **dadurch gekennzeichnet, dass** für die Bypass-Funktion benötigte Bypass-Kanäle (76) direkt in das Getriebegehäuse (26) integriert sind.

7. Getriebe (8) nach einem der Ansprüche 3 bis 6, **dadurch gekennzeichnet, dass** die Ventildeckelfeder (50) derart ausgelegt ist, dass der Ventildeckel (52) ab einem vorgegebenen Unter- bzw. Überdruck öffnet und somit die Verbindung zu den Bypass-Kanälen (76) freigibt.

8. Getriebe (8) nach einem der Ansprüche 2 bis 7, **dadurch gekennzeichnet, dass** der Wärmetauscher (30) mit dem Ventildeckel (52) und der Ventildeckelfeder (50) ein separates Bauteil darstellt, welches in die Vertiefung (56) im Getriebegehäuse (26) einsetzbar ist.

9. Getriebe (8) nach einem der Ansprüche 2 bis 8, **dadurch gekennzeichnet, dass** der Wärmetauscher (30) in der Vertiefung (56) zu Wartungs- und Montagezwecken von außerhalb des Gehäuses (26) zugängig ist.

10. Getriebe (8) nach einem der vorangegangenen Ansprüche, **dadurch gekennzeichnet, dass** der Wärmetauscher (30) als Rohrbündel-Wärmetauscher ausgebildet ist.

11. Getriebe (8) nach einem der vorangegangenen Ansprüche, **dadurch gekennzeichnet, dass** das Kühlmittel zum Abtransport der Wärme vom Getriebe (8) mit einem Kühler (38) außerhalb des Getriebes (8) verbindbar ist.

12. Getriebe (8) nach einem der Ansprüche 1 bis 12, **dadurch gekennzeichnet, dass** das Kühlmittel zum Abtransport der Wärme vom Getriebe (8) ein Kühlmittel im Kühlkreislauf eines Verbrennungsmotors (4) sein kann, der das Getriebe (8) antreibt.

13. Wärmetauscher (30), der Wärme aufnimmt und an ein Kühlmittel zum Abtransport der Wärme abgibt, **dadurch gekennzeichnet, dass** an dem Wärmetauscher (30) ein Ventildeckel (52) und eine Ventildeckelfeder (50) angeordnet sind,
und der Wärmetauscher (30) ein separates Bauteil darstellt, welches in eine Vertiefung (56) in einem Getriebegehäuse (26) einsetzbar ist, zum Abtransport der in einem Getriebe (8) erzeugten und an ein Getriebeschmiermittel übergebenen Wärme, und mit einem Ventilsitz (54) des Getriebegehäuses (26) ein als Sitzventil ausgebildetes Bypass - Ventil (48) bildet.

14. Wärmetauscher (30) nach Anspruch 13, **dadurch gekennzeichnet, dass** die Ventildeckelfeder (50) derart ausgelegt ist, dass der Ventildeckel (52) ab einem vorgegebenen Unter- bzw. Überdruck öffnet und somit eine Verbindung zu Bypass-Kanälen (76) freigibt.

15. Wärmetauscher (30) nach Anspruch 13 oder 14, **dadurch gekennzeichnet, dass** der Wärmetauscher (30) als Rohrbündel-Wärmetauscher ausgebildet ist.

## Claims

1. Transmission (8) having a transmission housing (26) which comprises a region, in which gearwheels (66, 68) rotate, having a heat exchanger (30) which absorbs heat, which is generated in the transmission (8) and is transferred to a transmission lubricant, and discharges it to a coolant for transporting the heat away from the transmission (8), **characterized in that** a bypass valve (48) is provided which makes it possible to bypass the heat exchanger (30) from a predefined negative or positive pressure, the bypass valve (48) being configured as a seat valve and having a valve cap (52), a valve-cap spring (50) and a valve seat (54), and the valve cap (52) and the valve-cap spring (50) being arranged on the heat exchanger, and the transmission housing (26) having the valve seat (54).

2. Transmission (8) according to Claim 1, **characterized in that** a depression (56) is provided in the transmission housing (26) outside the region, in which the gearwheels (66, 68) rotate, through which depression (56) the transmission lubricant flows, and in which depression (56) the heat exchanger (30) is arranged.

3. Transmission (8) according to Claim 1 or 2, **characterized in that** the valve cap (52) of the bypass valve (48) bears against the valve seat (54) in the non-actuated state.

4. Transmission (8) according to Claim 3, **characterized in that**, in the actuated state of the bypass valve (48), the transmission lubricant is guided through a region which is delimited by a sealing element (72) and through bypass channels (76).

5. Transmission (8) according to Claim 4, **characterized in that** the sealing element (72) is configured in the form of a tube made from plastic or metal.

6. Transmission (8) according to one of Claims 1 to 5, **characterized in that** bypass channels (76) which are required for the bypass function are integrated directly into the transmission housing (26).

7. Transmission (8) according to one of Claims 3 to 6, **characterized in that** the valve-cap spring (50) is designed in such a way that the valve cap (52) opens from a predefined negative or positive pressure and thus opens the connection to the bypass channels (76).

8. Transmission (8) according to one of Claims 2 to 7, **characterized in that** the heat exchanger (30) with the valve cap (52) and the valve-cap spring (50) represents a separate component which can be inserted into the depression (56) in the transmission housing (26).

9. Transmission (8) according to one of Claims 2 to 8, **characterized in that** the heat exchanger (30) can be accessed in the depression (56) from outside the housing (26) for maintenance and assembly purposes.

10. Transmission (8) according to one of the preceding claims, **characterized in that** the heat exchanger (30) is configured as a tubular heat exchanger.

11. Transmission (8) according to one of the preceding claims, **characterized in that** the coolant for transporting the heat away from the transmission (8) can be connected to a radiator (38) outside the transmission (8).

12. Transmission (8) according to one of Claims 1 to 12, **characterized in that** the coolant for transporting the heat away from the transmission (8) can be a coolant in the cooling circuit of an internal combustion engine (4) which drives the transmission (8).

13. Heat exchanger (30) which absorbs heat and discharges it to a coolant for transporting away the heat, **characterized in that** a valve cap (52) and a valve-cap spring (50) are arranged on the heat exchanger (30), and the heat exchanger (30) represents a separate component which can be inserted into a depression (56) in a transmission housing (26), for transporting away the heat which is generated in a transmission (8) and is transferred to a transmission lubricant, and, with a valve seat (54) of the transmission housing (26), forms a bypass valve (48) which is configured as a seat valve.

14. Heat exchanger (30) according to Claim 13, **characterized in that** the valve-cap spring (50) is designed in such a way that the valve cap (52) opens from a predefined negative or positive pressure and thus opens a connection to bypass channels (76).

15. Heat exchanger (30) according to Claim 13 or 14, **characterized in that** the heat exchanger (30) is configured as a tubular heat exchanger.

## Revendications

1. Transmission (8) comprenant un boîtier de transmission (26), qui comprend une région dans laquelle tournent des roues dentées (66, 68), un échangeur de chaleur (30), qui reçoit la chaleur produite dans la transmission (8) et transmise à un lubrifiant de transmission et qui la transmet à un réfrigérant en vue de l'évacuation de la chaleur hors de la transmission (8), **caractérisée en ce qu'**il est prévu une soupape de dérivation (48) qui permet de contourner l'échangeur de chaleur (30) à partir d'une dépression ou d'une surpression prédéfinies, la soupape de dérivation (48) étant réalisée sous forme de soupape à siège et présentant un couvercle de soupape (52), un ressort de couvercle de soupape (50) et un siège de soupape (54), et le couvercle de soupape (52) et le ressort de couvercle de soupape (50) étant disposés sur l'échangeur de chaleur et le boîtier de transmission (26) présentant le siège de soupape (54).

2. Transmission (8) selon la revendication 1, **caractérisée en ce que** l'on prévoit dans le boîtier de transmission (26), en dehors de la région dans laquelle tournent les roues dentées (66, 68), un renfoncement (56), qui est parcouru par le lubrifiant de la transmission et dans lequel est disposé l'échangeur de chaleur (30).

3. Transmission (8) selon la revendication 1 ou 2, **caractérisée en ce que** le couvercle de soupape (52) de la soupape de dérivation (48) s'applique dans l'état non activé contre le siège de soupape (54).

4. Transmission (8) selon la revendication 3, **caractérisée en ce que** dans l'état activé de la soupape de dérivation (48), le lubrifiant de la transmission est guidé à travers une région limitée par un élément d'étanchéité (72) et à travers des canaux de dérivation (76).

5. Transmission (8) selon la revendication 4, **caractérisée en ce que** l'élément d'étanchéité (72) est réalisé sous forme de tube en plastique ou en métal.

6. Transmission (8) selon l'une quelconque des revendications 1 à 5, **caractérisée en ce que** les canaux de dérivation (76) requis pour la fonction de dérivation sont intégrés directement dans le boîtier de transmission (26).

7. Transmission (8) selon l'une quelconque des revendications 3 à 6, **caractérisée en ce que** le ressort de couvercle de soupape (50) est conçu de telle sorte que le couvercle de soupape (52) s'ouvre à partir d'une dépression ou d'une surpression prédéfinies, et libère ainsi la connexion aux canaux de dérivation (76).

8. Transmission (8) selon l'une quelconque des revendications 2 à 7, **caractérisée en ce que** l'échangeur de chaleur (30) constitue avec le couvercle de soupape (52) et le ressort de couvercle de soupape (50) un composant séparé, qui peut être inséré dans le renfoncement (56) dans le boîtier de transmission (26).

9. Transmission (8) selon l'une quelconque des revendications 2 à 8, **caractérisée en ce que**, l'échangeur de chaleur (30) dans le renfoncement (56) est accessible depuis l'extérieur du boîtier (26) pour des opérations d'entretien et de montage.

10. Transmission (8) selon l'une quelconque des revendications précédentes, **caractérisée en ce que** l'échangeur de chaleur (30) est réalisé sous forme d'échangeur de chaleur à faisceaux de tubes.

11. Transmission (8) selon l'une quelconque des revendications précédentes, **caractérisée en ce que** le réfrigérant peut être connecté à un radiateur (38) à l'extérieur de la transmission (8) en vue de l'évacuation de la chaleur hors de la transmission (8).

12. Transmission (8) selon l'une quelconque des revendications 1 à 12, **caractérisée en ce que** le réfrigérant pour l'évacuation de la chaleur hors de la transmission (8) peut être un réfrigérant dans le circuit de refroidissement d'un moteur à combustion interne (4), qui entraîne la transmission (8).

13. Echangeur de chaleur (30), qui reçoit de la chaleur et qui la transmet à un réfrigérant en vue de l'évacuation de la chaleur, **caractérisé en ce qu'**un couvercle de soupape (52) et un ressort de couvercle de soupape (50) sont disposés sur l'échangeur de chaleur (30), et l'échangeur de chaleur (30) constitue un composant séparé qui peut être inséré dans un renfoncement (56) dans un boîtier de transmission (26), en vue de l'évacuation de la chaleur produite dans une transmission (8) et transférée à un lubrifiant de transmission, et forme, avec un siège de soupape (54) du boîtier de transmission (26), une soupape de dérivation (48) réalisée sous forme de soupape à siège.

14. Echangeur de chaleur (30) selon la revendication 13, **caractérisé en ce que** le ressort de couvercle de soupape (50) est conçu de telle sorte que le couvercle de soupape (52) s'ouvre à partir d'une dépression ou d'une surpression prédéfinies et libère ainsi une connexion aux canaux de dérivation (76).

15. Echangeur de chaleur (30) selon la revendication 13 ou 14, **caractérisé en ce que** l'échangeur de chaleur (30) est réalisé sous forme d'échangeur de chaleur à faisceaux de tubes.
